# EUROPÄISCHE PATENTSCHRIFT

(11) **EP 1 826 154 B1**
(45) Veröffentlichungstag und Bekanntmachung des Hinweises auf die Patenterteilung: **20.04.2011**
(21) Anmeldenummer: 06024362.3
(22) Anmeldetag: 24.11.2006
(51) Int. Cl.: B65G 15/26, B65G 21/14, B65G 41/00

(54) **Förderband zum Transportieren von Gegenständen**
Conveyor belt for transporting articles
Bande transporteuse pour transporter des articles

(30) Priorität: 24.02.2006 DE 102006008583
(43) Veröffentlichungstag der Anmeldung: 29.08.2007
(73) Patentinhaber: Gawronski GmbH Industrievertretungen, 73765 Neuhausen (DE)
(72) Erfinder: Gawronski, Seweryn, 73765 Neuhausen (DE)
(74) Vertreter: Goy, Wolfgang

(56) Entgegenhaltungen:
- WO-A-97/27131
- BE-A- 527 997
- DE-A1- 2 719 412
- US-A- 3 378 125
- US-A- 5 351 809
- US-A- 6 068 111

## Beschreibung

Die Erfindung betrifft ein Förderband zum Transportieren von Gegenständen nach dem Oberbegriff des Anspruchs 1.

Förderbänder zum Transportieren von Gegenständen sind in vielfältigen Ausführungsformen bekannt. Das Grundprinzip besteht darin, daß um zwei endseitige Trommeln ein Gurt endlos umläuft. Die Trommeln sind dabei auf einem Gestell drehbar gelagert. Die eine Trommel dient als Antriebstrommel, während die andere Trommel als Umlenktrommel dient.

Der Nachteil bei den bekannten Förderbändern besteht darin, daß die Förderstrecke durch die Länge des Transportbandes vorgegeben ist. Am einen Ende des Förderbandes wird der zu transportierende Gegenstand aufgegeben und am anderen Ende entnommen. Das Problem besteht darin, daß lange Transportstrecken nur dann bewältigt werden können, wenn das Förderband stationär aufgebaut ist. Denn aufgrund der Länge des Transportbandes ist ein Standortwechsel nicht möglich. Ein Standortwechsel ist nur dann möglich, wenn des Transportband nur für relativ kurze Transportstrecken ausgebildet ist.

Die US 3 378 125 A zeigt einen Förderer der eingangs angegebenen Art bestehend aus drei Förderbändern, welche teleskopierbar sind. Die Förderbänder weisen dabei seitlich Schienen auf, auf welchen Rollen des davor bzw. dahinter liegenden Förderbandes aufliegen. Dabei sind die Rollen an nach oben gerichteten Winkeln angeordnet sowie vom freien Ende des entsprechenden Förderbandes zur Mitte hin versetzt. Indem somit die Rollen der Förderbänder nicht am äußersten Ende angeordnet sind, müssen die Förderbänder beim Auseinanderfahren bzw. beim Ineinanderfahren parallel aneinander liegen. Dies macht es dann erforderlich, daß die Gestelle höhenverstellbar sind, um so den beim Teleskopieren sich ändernden Neigungswinkel der Förderbänder auszugleichen. Zu diesem Zweck sind dann auch zusätzliche Führungen vorgesehen.

Die DE 27 19 412 A1 zeigt einen fahrbaren Bandförderer, welcher aus insgesamt drei Förderbändern besteht. Jedes dieser Förderbänder besitzt ein eigenes Gestell sowie einen eigenen, endlos umlaufenden Gurt. Im Nichtgebrauchszustand der Förderbänder sind diese in ihrer Längserstreckung zusammengeschoben, während sie im Gebrauchszustand teilweise oder vollständig, teleskopartig in Längserstreckung der Förderbänder auseinandergefahren werden können. Zu diesem Zweck weisen die Gestelle seitlich in Verfahrrichtung des Förderbandes sich erstreckende Schienen auf. Auf diesen Schienen ist ein Verfahrgestell aus Seitenplatten und einem Drehrahmen auf Rollen verfahrbar angeordnet. Dabei sind die beiden Seitenplatten jeweils mit zwei Rollen vorne und hinten bestückt. Der Drehrahmen ist ferner mit einem mehrachsigen Drehgelenk versehen, auf dem sich das Abwurfende des darüberliegenden Förderbandes abstützt. Dieses Drehgelenk ist nach Art eines Kardangelenks ausgebildet und ermöglicht eine freie Einstellung der Neigung des darüberliegenden Förderbandes sowohl hinsichtlich des Neigungswinkels in der Gestellängsrichtung, also hinsichtlich des Neigungswinkels in Bezug auf die Gestellquerrichtung.

Die BE 527 997 A zeigt ein teleskopierbares Förderband. Offensichtlich liegen dabei die Vorderenden des darüber befindlichen Förderbandes auf dem darunter liegenden Förderband auf.

Der Erfindung liegt die **Aufgabe** zugrunde, einen Förderer zum Transportieren von Gegenständen der eingangs angegebenen Art zu schaffen, welcher die Länge der Förderbänder voll ausnutzt.

Die technische **Lösung** ist gekennzeichnet durch die Merkmale im Kennzeichen des Anspruchs 1.

Dadurch ist ein Teleskopförderband geschaffen, welches einerseits sehr flexibel in der Handhabung ist und welches andererseits auch große Transportstrecken bewältigen kann. Flexibel ist das Förderband dadurch, daß für den Nichtgebrauchszustand die einzelnen Förderbänder einfach zusammengeschoben werden, so daß sich daraus ein kompaktes Gebilde ergibt, welches von einem Einsatzort zum anderen bewegt werden kann. Da im Gebrauchszustand des Förderbandes die Einzel-Förderbänder teleskopartig auseinandergefahren sind, können dadurch entsprechend lange Strecken überwunden werden. Entsprechend der Anzahl der Einzel-Förderbänder multipliziert sich die Förderstrecke auf die Länge des Einzel-Förderbandes mal deren Anzahl. Die Grundidee des erfindungsgemäßen Förderbandes zum Transportieren von Gegenständen besteht somit darin, daß eine Mehrzahl von Einzel-Förderbändern vorgesehen sind, welche jedoch nicht vollständig separat voneinander ausgebildet sind, sondern derart konstruktiv miteinander verbunden sind, daß sie zusammengeschoben bzw. auseinandergefahren werden können. Dadurch ist mit wenigen Handgriffen das Förderband aus dem Nichtgebrauchszustand in den Gebrauchszustand überführbar, und umgekehrt. Das Grundprinzip der konstruktiven, verschiebbaren Verbindung zwischen den Einzel-Förderbändern besteht darin, daß - wo benötigt - die Gestelle seitliche Schienen aufweisen, welche sich vorzugsweise parallel zur Erstreckungsrichtung der Gurte erstrecken. In oder auf diesen Schienen laufen dann die Rollen des benachbarten Förderbandes. Dabei schafft die Schienen-Rollen-Einheit eine gegenseitige Abstützung. Grundsätzlich sind dabei verschiedene technische Realisierungen denkbar. Zum einen kann beispielsweise das bezüglich eines Förderbandes dahinter befindliche Förderband an seinem Förderende seitlich Rollen aufweisen, auf denen die Schienen des vorderen Förderbandes laufen. Diese Variante ist insbesondere dann von Vorteil, wenn das vordere Förderband nicht komplett in das dahinter befindliche Förderband eingeschoben wird, sondern nur etwa bis zur Mitte oder bis zum vorderen Drittel, wenn also kein zu großes Drehmoment entsteht. Zum anderen kann in einer alternativen Variante das hintere Ende eines vorderen Förderbandes im Bereich der Trommeln Rollen aufweisen, welche auf den Schienen des dahinter liegenden Förderbandes aufliegen. Damit ist das vordere Förderband mit seinem hinteren Ende voll auf den Schienen des dahinter befindlichen Förderbandes abgestützt.

Die Weiterbildung gemäß Anspruch 2 bringt den Vorteil mit sich, daß im zusammengeschobenen Zustand, also im Nichtgebrauchszustand des Förderbandes dieses sehr kompakt ausgebildet ist, indem die Gurte in mehreren Etagen übereinander liegen. Somit wird im ineinandergeschobenen Zustand der Förderbänder der vertikale freie Raum unterhalb des obersten Förderbandes für die anderen Förderbänder genutzt.

Die Weiterbildung gemäß Anspruch 3 hat den Vorteil, daß im auseinandergefahrenen Zustand eine einwandfreie Übergabe der Gegenstände von einem Förderband zum anderen gewährleistet ist.

Um eine kompakte Bauweise zu schaffen, schlägt die Weiterbildung gemäß Anspruch 4 vor, daß die Schienen im Bereich zwischen den Trommeln des Gurtes angeordnet sind. Dadurch liegen die Gurte im zusammengeschobenen Zustand der Förderbänder dicht übereinander.

Um die Verfahrbarkeit des Gesamtförderbandes sowie der Einzel-Förderbänder zu erleichtern, schlägt die Weiterbildung gemäß Anspruch 5 vor, daß die Gestelle auf unterseitigen Fahrrollen verfahrbar sind.

Eine weitere bevorzugte Weiterbildung schlägt Anspruch 6 vor. Der Vorteil besteht darin, daß durch die Höhenverstellbarkeit entweder des hintersten oder des vordersten Förderbandes das Beladen sowie Entladen vereinfacht ist. Wird beispielsweise ein Lastkraftwagen beladen oder entladen, kann durch den Hubtisch eine Anpassung an die Ladehöhe vorgenommen werden. Vorzugsweise ist eine stufenlose Verstellbarkeit beispielsweise über einen hydraulischen Scherentisch möglich. Dabei wird das hinterste oder vorderste Transportband für die Höhenverstellbarkeit für unterschiedliche Neigungswinkel um eine Drehachse gekippt.

Die Weiterbildung gemäß Anspruch 7 hat den Vorteil, daß das Be- und Entladen für die Bedienungsperson vereinfacht wird, wenn eine Arbeitsplattform vorgesehen ist. Dies gilt insbesondere im Hinblick darauf, daß das hinterste oder das vorderste Förderband höhenverstellbar ist. Die Arbeitsplattform ist vorzugsweise hochklappbar, so daß sie im Nichtgebrauchszustand wenig hinderlich ist.

Zwei Ausführungsbeispiele eines erfindungsgemäßen Förderbandes zum Transportieren von Gegenständen wird nachfolgend anhand der Zeichnungen beschrieben. In diesen zeigt:
- Fig. 1a: eine erste Ausführungsform des Förderbandes in einer per- spektivischen Darstellung insbesondere zum Beladen von Lastkraftwagen, wobei die Einzel-Förderbänder zusammenge- fahren sind;
- Fig. 1b: eine Darstellung entsprechend der in Fig. 1a, wobei das vor- derste Einzel-Förderband ausgefahren ist;
- Fig. 1c: eine Darstellung entsprechend der in Fig. 1b, wobei zusätzlich auch das zweite Einzel-Förderband ausgefahren ist;
- Fig. 1d: das Förderband, wobei sämtliche Einzel-Förderbänder ausge- fahren sind;
- Fig. 1e: einen Ausschnitt aus dem Förderband im Bereich des vorder- sten Einzel-Förderbandes mit hochgefahrener Arbeitsbühne;
- Fig. 2: einen Detailausschnitt im Bereich zwischen dem vordersten Einzel-Förderband und dem zweiten Einzel-Förderband;
- Fig.3: einen Detailausschnitt im Bereich des letzten Einzel- Förderbandes und dem vorletzten Einzel-Förderbandes;
- Fig. 4a: eine Stirnansicht des Förderbandes im zusammengeschobe- nen Zustand;
- Fig. 4b: ein Detailausschnitt aus der Darstellung in Fig. 4a;
- Fig. 5a: eine zweite Ausführungsform des Förderbandes in einer per- spektivischen Darstellung insbesondere zum Entladen von Lastkraftwagen, wobei die Einzel-Förderbänder zusammenge- fahren sind;
- Fig. 5b: das Förderband in Fig. 5a, wobei jedoch das hinterste Einzel- Förderband ausgefahren und die Arbeitsbühne hochgefahren ist;
- Fig. 5c: eine Darstellung entsprechend der in Fig. 5b, wobei das vor- derste Einzel-Förderband ausgefahren ist;

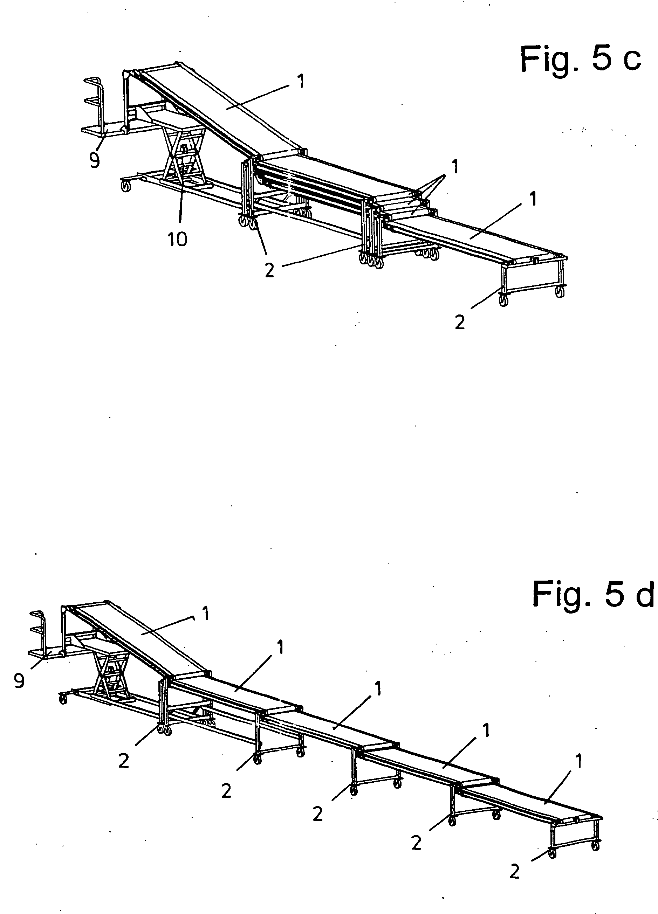

- Fig. 5c: das Förderband, bei dem alle Einzel-Förderbänder ausgefahren und die Arbeitsbühne hochgefahren ist;

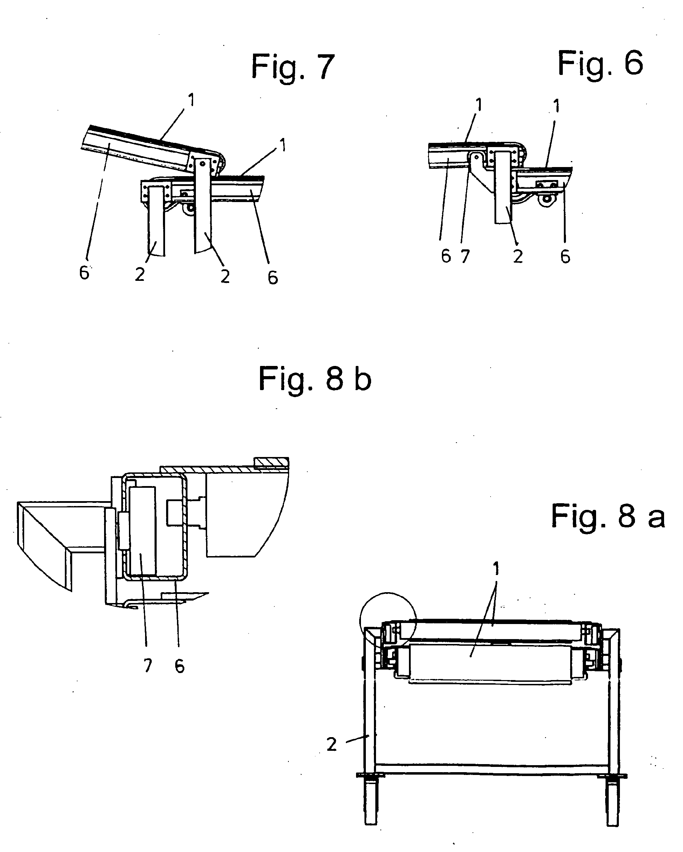

- Fig. 6: ein Detailausschnitt im Bereich zwischen dem vordersten Ein- zel-Förderband und dem zweitvordersten Einzel-Förderband;
- Fig. 7: ein Detailausschnitt im Bereich zwischen dem hintersten Einzel- Förderband und dem benachbarten zweiten Förderband;
- Fig. 8a: eine Schnittdarstellung im Bereich des zweitvordersten Einzel- Förderbandes;
- Fig. 8b: ein Detailausschnitt aus der Darstellung in Fig. 8a

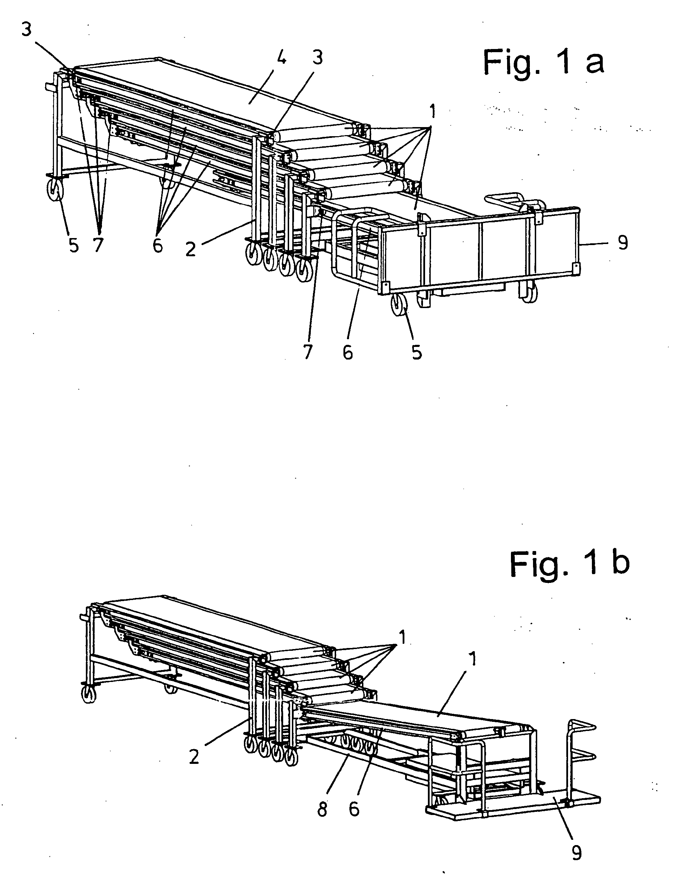

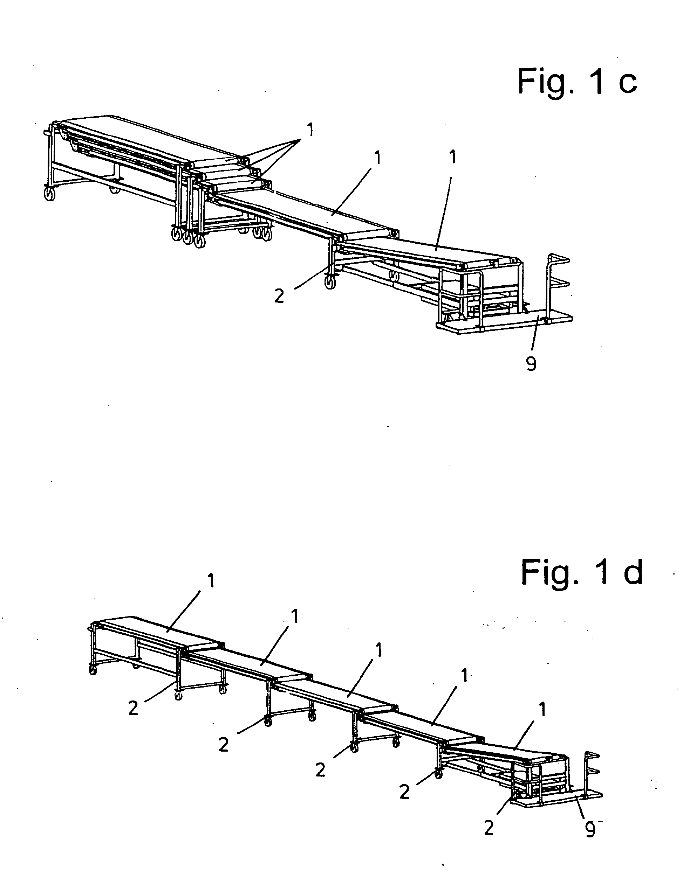

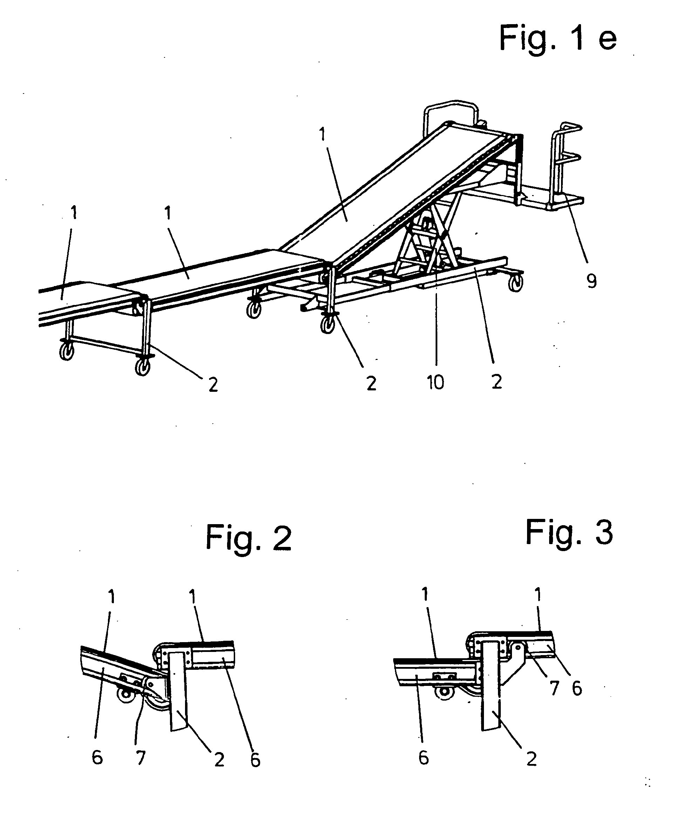

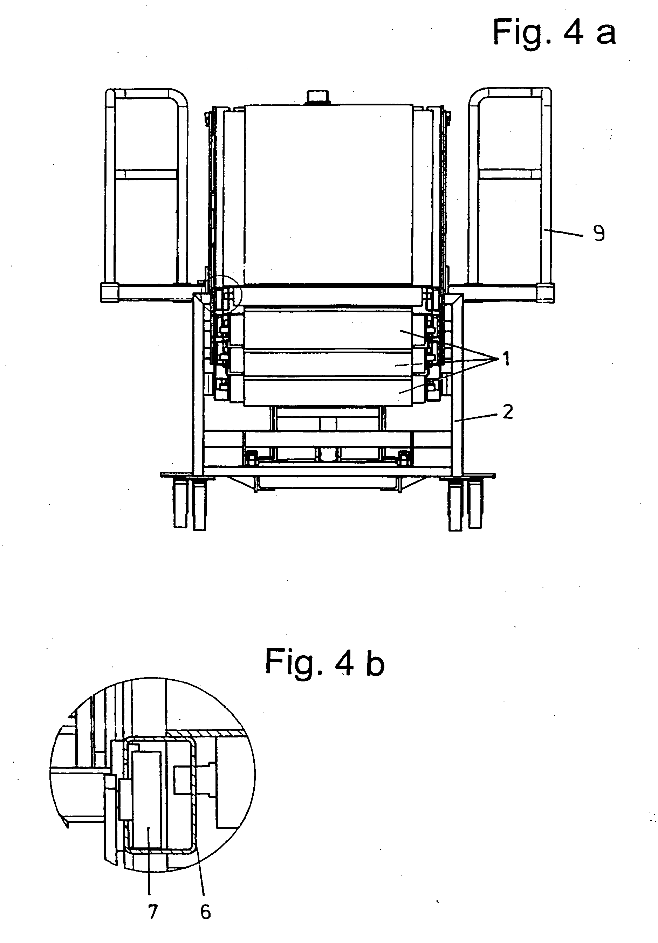

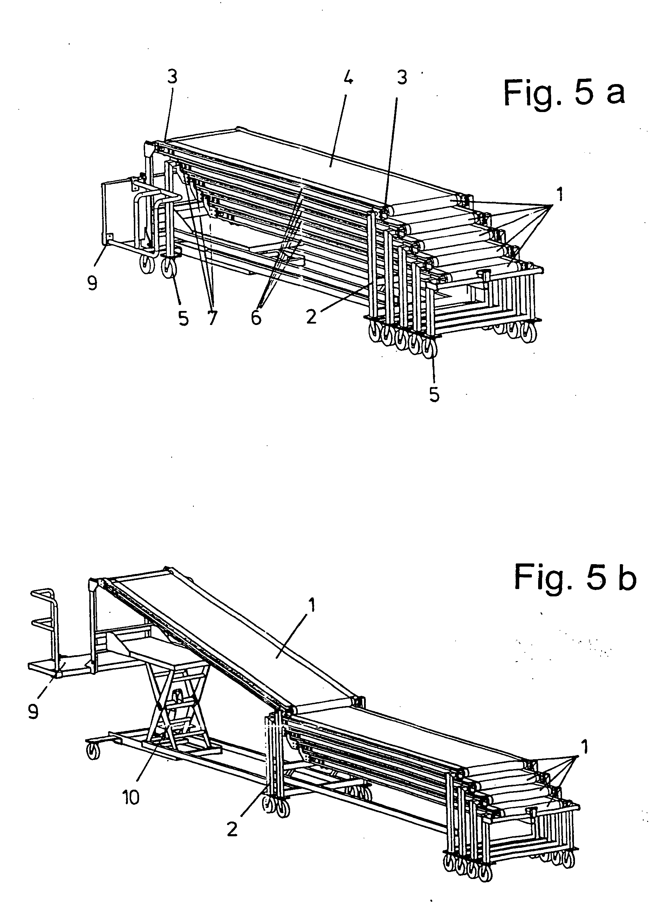

Die Fig. 1 bis 4 zeigen eine erste Ausführungsform eines Förderbandes insbesondere zum Beladen von LKW's, während die Fig. 5 bis 8 eine zweite Ausführungsform eines Förderbandes zum Entladen insbesondere von LKW's zeigen.

Die erste Ausführungsform in Fig. 1 bis 4 zeigt ein Gesamtförderband, welches insgesamt aus fünf einzelnen Förderbändern 1 besteht. Sämtliche Förderbänder 1 weisen ein Gestell 2 mit endseitigen Trommeln 3 auf (wobei die eine Trommel 3 als Antriebstrommel und die andere Trommel 3 als Umlenktrommel dient), um die herum ein endloser Gurt 4 geführt ist. Die Gestelle 2 der Förderbänder 1 sind unterseitig auf Fahrrollen 5 gelagert.

Jedem der fünf Förderbänder 1 sind zwischen den Trommeln 3 zwei Schienen 6 zugeordnet. Weiterhin weisen die Gestelle 2 Rollen 7 auf, welche den Schienen 6 zugeordnet sind.

Wenn nachfolgend von dem vordersten Förderband 1 gesprochen wird, so ist damit in den Fig. 1a bis 1d das am weitesten rechts liegende Förderband 1 gemeint. Es ist dasjenige Förderband 1, von welchem der transportierte Gegenstand nach Durchlaufen der Transportstrecke entnommen wird. Entsprechend ist in den Fig. 1a bis 1d das am weitesten links liegende Förderband 1 das hinterste Förderband 1. Es ist dasjenige Förderband 1, auf welches die zu transportierenden Gegenstände aufgegeben werden.

Das vorderste Förderband 1 weist - wie ausgeführt - seitlich Schienen 6 auf. Das Gestell 2 des dahinterliegenden Förderbandes 1 weist dazu korrespondierend seitlich Rollen 7 auf, welche in die Schienen 6 des vordersten Förderbandes 1 eingreifen (Fig. 2). Zusätzlich ist zwischen diesem vordersten Förderband und dem dahinterliegenden Förderband 1 noch eine Teleskopstange 8 angeordnet.

Das vorderste Förderband 1 weist noch eine Arbeitsplattform 9 auf, sowie weiterhin eine Hubeinrichtung 10.

Das zweitvorderste Förderband 1 weist am hinteren Ende im Bereich der hinteren Trommel 3 Rollen 7 mit horizontalen Achsen auf, welche in den Schienen 6 des drittvordersten Förderbandes 1 liegen (Fig. 3). Um die Höhe zu überbrücken, sind die Rollen 7 an einem nach oben gerichteten Winkel angeordnet. In entsprechender Weise sind die restlichen Förderbänder 1 an dem jeweils dahinter sich befindenden Förderband 1 gelagert.

Die Funktionsweise ist wie folgt:
Fig. 1 a zeigt das Teleskopförderband im zusammengefahrenen Zustand. Die Arbeitsplattform 8 ist dabei nach oben geklappt.
In Fig. 1b ist dann die Arbeitsplattform 9 nach unten geklappt, und das vorderste Förderband 1 ist ausgefahren. Das vorderste Förderband 1 rollt dabei auf den vorderen Fahrrollen 5 des Gestells 2. Rückseitig ist das vorderste Förderband 1 mit seinen Schienen 6 auf den Rollen 7 des zweitvordersten Förderbandes 1 abgestützt. Wie in Fig. 1 a erkennbar ist, ist das vorderste Förderband 1 im Nichtgebrauchszustand nicht vollständig eingefahren.
In Fig. 1c ist dargestellt, wenn zusätzlich auch das zweitvorderste Förderband 1 ausgefahren ist, indem seine rückseitigen Rollen 7 in den Schienen 6 des drittvordersten Förderbandes 1 laufen.
Fig. 1d schließlich zeigt das Teleskopförderband, bei dem sämtliche Förderbänder 1 ausgefahren sind.
Fig. 1e schließlich zeigt, daß beim vordersten Förderband 1 die Hubeinrichtung 10 betätigt worden ist, indem im Bereich der Übergangsstelle zwischen dem vordersten Förderband 1 und dem zweitvordersten Förderband 1 eine Drehachse durch die entsprechenden Rollen 7 definiert ist. In diesem Zustand kann dann die Beladung des Lastkraftwagens erfolgen.

Die zweite Ausführungsform in Fig. 5 bis 8 unterscheidet sich vom Grundprinzip nicht wesentlich von der Ausführungsform in Fig. 1 bis 4. Der Unterschied besteht darin, daß diese Variante zum Entladen insbesondere von Lastkraftwagen dient.

Bei dieser Ausführungsform erfolgt die Teleskoplagerung der drei vordersten Förderbänder dadurch, daß diese am rückseitigen Ende jeweils Rollen 7 aufweisen, welche in den Schienen 6 des jeweils dahinter befindlichen Förderbandes 1 abgestützt eingehängt sind (Fig. 6).

Eine Abweichung von der ersten Ausführungsform tritt lediglich im Bereich zwischen den beiden letzten Förderbändern 1 auf, wie dies in Fig. 7 dargestellt ist. Hier ist das Gestell 2 des hintersten Förderbandes 1 längs des Gestells 2 des davor befindlichen Förderbandes 1 geführt (wobei seitlich Führungsrollen vorgesehen sein können). Auf jeden Fall sind die Schienen 6 des hintersten Förderbandes 1 nicht an der Verschiebebewegung beteiligt.

Die Funktionsweise ist wie folgt:
Fig. 5a zeigt das Teleskopförderband zum Entladen insbesondere von Lastkraftwagen im zusammengefahrenen Zustand.
Fig. 5b zeigt den Zustand, nachdem das hinterste Förderband 1 ausgefahren und die Arbeitsplattform 9 hochgefahren worden ist. Das Vorderende des Förderbandes 1 ist dabei im Bereich der vorderen Trommel 3 am Gestell 2 verschwenkbar gelagert.
Fig. 5c zeigt den Zustand, nachdem auch das vorderste Förderband 1 ausgefahren worden ist. Dieses vorderste Förderband 1 ist - wie ausgeführt - mit seinen rückseitigen Rollen 7 in den Schienen 6 des dahinter befindlichen Förderbandes 1 verschiebbar gelagert.
Fig. 5d schließlich zeigt das Teleskopförderband, nachdem alle einzelnen Förderbänder 1 ausgefahren worden sind.

### Bezugszeichenliste

- 1: Förderband
- 2: Gestell
- 3: Trommel
- 4: Gurt
- 5: Fahrrolle
- 6: Schiene
- 7: Rolle
- 8: Teleskopstange
- 9: Arbeitsplattform
- 10: Hubeinrichtung

## Patentansprüche

1. Förderer (1) zum Transportieren von Gegenständen,
mit mehreren Förderbändern (1),
welche jeweils ein eigenes Gestell (2) und einen eigenen, um endseitige Trommeln (3) endlos umlaufenden Gurt (4) aufweisen,
wobei die Förderbänder (1) im Nichtgebrauchszustand in ihrer Längserstreckung zusammengeschoben sind und im Gebrauchszustand teilweise oder vollständig, teleskopartig in Längserstreckung der Förderbänder (1) auseinandergefahren werden können, wobei die Gestelle (2) seitlich in Verfahrrichtung des Förderbandes (1) sich erstreckende Schienen (6) aufweisen, auf denen am Gestell (2) des davor und/oder dahinter liegenden Förderbandes (1) angeordnete Rollen (7) verfahrbar sind,
wobei im Seitenbereich desjenigen Förderbandes (1), welches unterhalb des benachbarten Förderbandes (1) liegt, beidseitig nach oben gerichtete Winkel angeordnet sind, wobei die Rollen (7) innenseitig am oberen Ende dieser Winkel angeordnet sind und in den Schienen (6) des darüber befindlichen Förderbandes (1) gelagert sind und wobei das Gestell (2) am ersten Ende der Schiene (6) des Förderbandes (1) angeordnet ist,
**dadurch gekennzeichnet,**
**daß** die Winkel mit ihren Rollen (7) in Fortsetzung der Schiene (6) direkt an dem äußersten, zweiten Ende dieser Schiene (6) angeordnet ist.

2. Förderband nach dem vorhergehenden Anspruch,
**dadurch gekennzeichnet,**
**daß** im zusammengeschobenen Zustand die Gurte (4) der Förderbänder (1) etagenartig übereinander angeordnet sind.

3. Förderband nach einem der vorhergehenden Ansprüche,
**dadurch gekennzeichnet,**
**daß** im auseinandergefahrenen Zustand in Förderrichtung gesehen das Vorderende des jeweils dahinter liegenden Gurtes (4) bezüglich zum Hinterende des davorliegenden Gurtes (4) kaskadenartig oberhalb liegt.

4. Förderband nach einem der vorhergehenden Ansprüche,
**dadurch gekennzeichnet,**
**daß** die Schienen (6) im Bereich zwischen den Trommeln (3) des Gurtes (4) angeordnet sind.

5. Förderband nach einem der vorhergehenden Ansprüche,
**dadurch gekennzeichnet,**
**daß** die Gestelle (6) auf unterseitigen Fahrrollen (5) verfahrbar sind.

6. Förderband nach einem der vorhergehenden Ansprüche,
**dadurch gekennzeichnet,**
**daß** das in Transportrichtung gesehene hinterste und/oder vorderste Förderband (1) höhenverstellbar ist.

7. Förderband nach einem der vorhergehenden Ansprüche,
**dadurch gekennzeichnet,**
**daß** das in Transportrichtung gesehene hinterste und/oder vorderste Förderband (1) rückseitig bzw. vorderseitig eine Arbeitsplattform (9) aufweist.

## Claims

1. Conveyor (1) for transporting objects,
with several conveyor belts (1),
each with its own frame (2) and its own endless belt (4) running around drums (3) at the ends,
wherein in the unused state, the conveyor belts (1) are telescoped together in the longitudinal extension and in the usage state can be partly or fully extended telescopically in the longitudinal extension of the conveyor belts (1), wherein the frames (2) have rails (6) extending along the side in the movement direction of the conveyor belt (1), on which can be moved rollers (7) arranged on the frame (2) of the preceding or succeeding conveyor belt (1),
wherein in the side area of the conveyor belt (1) lying below the adjacent conveyor belt (1), on both sides are arranged upwardly directed angle brackets,
wherein the rollers (7) are arranged on the inside at the upper end of these angle brackets and mounted in the rails (6) of the upper conveyor belt (1), and wherein the frame (2) is arranged at the first end of the rails (6) of the conveyor belt (1),
**characterised in that**
the angle bracket with its rollers (7) in a continuation of the rail (6) is arranged directly on the outside second end of this rail (6).

2. Conveyor belt according to the preceding claim, **characterised in that** in the retracted state, the belts (4) of the conveyor belt (1) are arranged above each other in storeys.

3. Conveyor belt according to any of the preceding claims, **characterised in that** in the extended state, viewed in the transport direction, the front end of the preceding belt (4) lies cascade-like above the rear end of the succeeding belt (4).

4. Conveyor belt according to any of the preceding claims, **characterised in that** the rails (6) are arranged in the area of the belt (4) between the drums (3).

5. Conveyor belt according to any of the preceding claims, **characterised in that** the frames (6) can be moved on drive rollers (5) which are arranged underneath.

6. Conveyor belt according to any of the preceding claims, **characterised in that** viewed in the transport direction, the rearmost and/or foremost conveyor belt (1) is height-adjustable.

7. Conveyor belt according to any of the preceding claims, **characterised in that** viewed in the transport direction, the rearmost and/or foremost conveyor belt (1) has a working platform (9) at the back and/or front respectively.

## Revendications

1. Convoyeur (1) pour transporter des articles, avec plusieurs bandes transporteuses (1) qui présentent chacune un propre bâti (2) et une propre courroie (4) circulant sans fin autour de tambours terminaux (3),
sachant que les bandes transporteuses (1) sont rétractées dans leur direction longitudinale dans l'état de non-utilisation et peuvent, dans l'état d'utilisation, être partiellement ou totalement déployées télescopiquement dans la direction longitudinale des bandes transporteuses (1),
sachant que les bâtis (2) présentent des rails (6) s'étendant sur les côtés dans la direction de déplacement de la bande transporteuse (1), rails sur lesquels peuvent être déplacés des galets (7) disposés sur le bâti (2) de la bande transporteuse (1) précédente et/ou suivante, sachant que des équerres dirigées vers le haut sont disposées de part et d'autre dans la région latérale de la bande transporteuse (1) qui se trouve en dessous de la bande transporteuse voisine (1),
sachant que les galets (7) sont disposés sur le côté intérieur à l'extrémité supérieure de ces équerres et sont reçus dans les rails (6) de la bande transporteuse (1) qui se trouve au-dessus, et
sachant que le bâti (2) est disposé à la première extrémité du rail (6) de la bande transporteuse (1),
**caractérisé en ce que** l'équerre avec ses galets (7) est disposée dans le prolongement du rail (6) directement à la deuxième extrémité, la plus extérieure, de ce rail (6).

2. Bande transporteuse selon la revendication précédente, **caractérisée en ce que**, dans l'état rétracté, les courroies (4) des bandes transporteuses (1) sont disposées les unes au-dessus des autres de manière étagée.

3. Bande transporteuse selon l'une des revendications précédentes, **caractérisée en ce que**, dans l'état déployé, considéré dans la direction de transport, l'extrémité avant de la courroie suivante respective (4) est disposée en cascade au-dessus de l'extrémité arrière de la courroie précédente respective (4).

4. Bande transporteuse selon l'une des revendications précédentes, **caractérisée en ce que** les rails (6) sont disposés dans la région située entre les tambours (3) de la courroie (4).

5. Bande transporteuse selon l'une des revendications précédentes, **caractérisée en ce que** les bâtis (2) peuvent être déplacés sur des roulettes (5) situées sur le dessous.

6. Bande transporteuse selon l'une des revendications précédentes, **caractérisée en ce que** la bande transporteuse (1) la plus en arrière et/ou la plus en avant, considéré dans la direction de transport, est réglable en hauteur.

7. Bande transporteuse selon l'une des revendications précédentes, **caractérisée en ce que** la bande transporteuse (1) la plus en arrière et/ou la plus en avant, considéré dans la direction de transport, présente respectivement sur le côté arrière ou sur le côté avant une plate-forme de travail (9).
